# EUROPEAN PATENT SPECIFICATION

(11) **EP 0 940 040 B1**
(45) Date of publication and mention of the grant of the patent: **20.04.2005**
(21) Application number: 97926027.0
(22) Date of filing: 11.06.1997
(51) Int. Cl.: H04N 7/173, G06F 17/30, G06F 13/00

(54) **FILE SERVER WITH A CONFIGURATION SUITED FOR DISTRIBUTION OF DECENTRALIZED DATA**
DATEIPROZESSOR ZUR VERTEILUNG VON DEZENTRALEN NACHRICHTEN
SERVEUR DE FICHIERS AYANT UNE CONFIGURATION CON UE POUR LA DISTRIBUTION DE DONNEES DECENTRALISEES

(30) Priority: 13.06.1996 FI 962467
(43) Date of publication of application: 08.09.1999
(73) Proprietor: Oy Hedcom Ab, 00200 Helsinki (FI)
(72) Inventor: Ollikainen, Ville Juhana, 03400 Vihti (FI)
(74) Representative: Savela, Antti-Jussi
(86) International application number: PCT/FI1997/000366
(87) International publication number: WO 1997/048049

(56) References cited:
- EP-A- 0 633 694
- EP-A- 0 701 373
- WO-A-95/33309
- WO-A-96/37983
- US-A- 5 045 940
- US-A- 5 371 532
- US-A- 5 471 580
- US-A- 5 673 264

## Description

### Field of the invention

The present invention relates to a file server comprising storage means for storage of information and means for delivering a piece of information to users in response to the user's request.

### Background art

Typical server for delivering information, such as data files, audio and video files, comprise several units of RAID disks (RAID, Redundant Array of Inexpensive Disks) each of which being connected through a RAID controller to a common internal bus. The bus is of type ISA,EISA,PCI, S-Bus or like. Central processor unit CPU and peripheral devices also share the internal bus. A user is able to access the server system for retrieving information thereof by connecting via an appropriate interface unit to the bus, for instance via an Ethernet card. A limitation on such system for delivering several isochronous data streams is the bus itself because the bus is used both transferring system data between units connected to the bus and information from RAID disks to the users.

The limitation can be reduced by sharing the bus into two segments which are interconnected by a bridge. The system data use its own bus whereas another bus is mainly reserved for transferring stored information to the users.

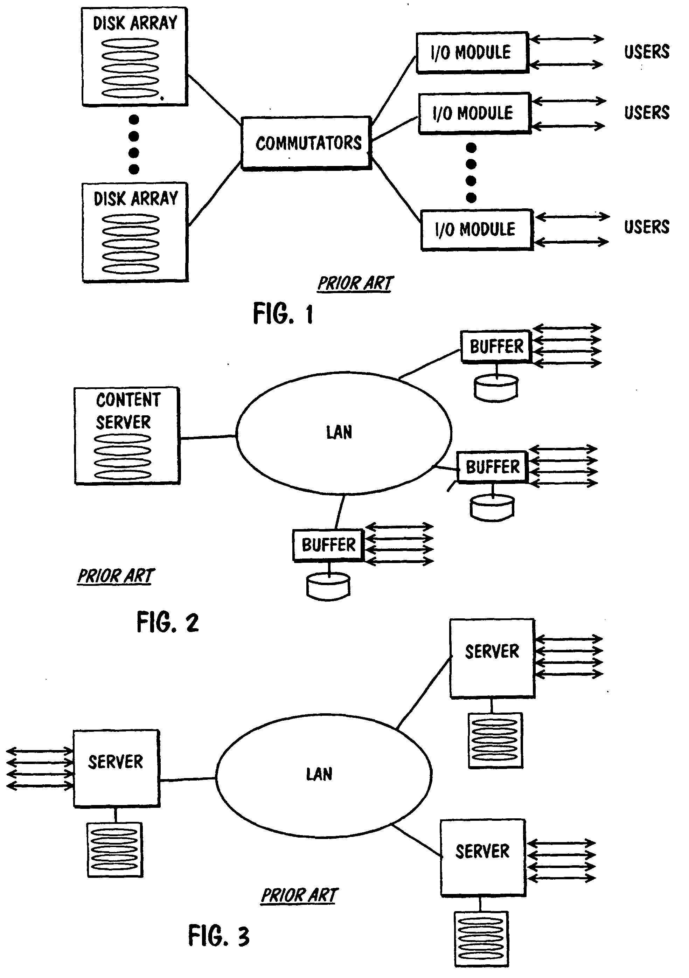

FIG. 1 shows a more effective way to deliver information to the users. It depicts a scalable Information such as data files, audio or video files are stored in disk arrayed in several units. Information to be loaded in disks is obtained from service providers via I/O modules. Each module and the commutators stripe incoming data to the controllers of the disk array units and the controllers load data to the disks in accordance with the used RAID system. In the opposite direction information is retrieved from the disk array units and compiled in the I/O unit before transmission to the user.

FIG. 2 depicts another way to build a scalable media server. The main storage of information is a content server which is connected to a LAN network. A piece of information which is intended to download to a user is copied from the centralized main storage through the LAN to a buffer from which information is further downloaded to the user. Because the transmission rate from the buffer to the user is slower than that of the LAN network, downloading might be started already during copying process. Scalability is obtained by adding new buffers but eventually the bottleneck is the main storage, especially in video-on-demand applications where user behavior can not anticipated.

FIG. 3 shows still another approach to build a scalable server. The idea is to decentralize information to a plurality of servers which are interconnected through the LAN. In case requested information for starting play back is not available in the buffer in question, it is copied from another server. Copying can be carried out before starting play back of information, i.e. before downloading to a user, or downloading could be start during copying process. Scalability is obtained by adding new servers but the bottleneck is the same as that in the server of FIG. 2 and eventually limited transmission capacity of the LAN.

One way to overcome the bottleneck is to interconnect the servers with a fixed and fast lines. Then information exchange between the serves can be much faster than what is possible to obtain by using the LAN. However, by increasing the number of servers the number of fixed lines grows rapidly which leads to difficulties in controlling the system. Nevertheless, this kind of video servers, which can be called networked video servers have recently made their way into facilities in the broadcast industry because networking a few small servers together produces a fault tolerant system with high reliability.

Drawbacks of the prior art media serves are their limited capability to deliver isochronous information, especially video files. Further, in case several user will simultaneously or in short time intervals have the same video file, its retrieving and loading to user's computer or set top box take a remarkable time.

Approaches based on conventional server architectures stumble on problems caused by limitations in transmission channel bandwidths and seek times of storage devices, file fragmentation, data management and unsatisfactory fault tolerance, whereby any attempts to solve these problems result in an appreciable rise in the cost of servers.

### Summary of the invention

The objective of the present invention, which is defined in its broadest aspect in claim 1, is to accomplish a server for isochronous data streams which is fully scalable but inexpensive and reasonably easy to manage. The server according to the present invention is formed of a plurality of nodes, each node comprising a routing matrix capable to route incoming information like a video clip or like through the node towards the addressed target node, a storage into which the routing matrix is capable to route incoming information addressed to a user connected to this node, wherein a copy of information delivered to the user is stored in the storage. As a result, a plurality of the nodes in the server can contain same information. In case a new user request said piece of information like a video clip or like, a control system examines from which node it is most appropriate to transfer the piece of information to the new user's node. While delivering said peace of information to the new user, a copy is made to the storage in the new user's node. In the preferred embodiment, the nodes of the server are interconnected with links in such a way that the nodes and the links form a hyper cube structure known *per se.*

### Brief description of the drawings

The foregoing and other features of the present invention will be more readily apparent from the following detailed description and drawings of the illustrative embodiments of the invention in which:
- Fig. 1: depicts one solution to construct a scalable server;
- Fig. 2: shows a server using LAN and distributed buffers ;
- Fig. 3: illustrates servers interconnected through LAN;
- Fig. 4: presents a basic principle of the server according to the invention;
- Fig. 5: depicts the structure of the node;
- Fig. 6: shows a ring buffer for reading and writing files;
- Fig. 7: shows 0 dimensional hyper cube;
- Fig. 8: shows 1 dimensional hyper cube;
- Fig. 9: shows 2 dimensional hyper cube;
- Fig. 10: shows 3 dimensional hyper cube;
- Fig. 11: shows 4 dimensional hyper cube;
- Fig. 12: shows a server having 5 dimensional hyper cube architecture; and
- Fig. 13: illustrates routing in the server of fig. 12.

### Description of illustrative embodiments

The present invention is based on distributing the user-requested files over the nodes serving at least one user, whereby each node can not serve their own users only but also distribute files over data links to other nodes with a relatively low delay. The files requested by several users simultaneously are copied in a chain-reaction-like fashion to all the nodes forming the server.

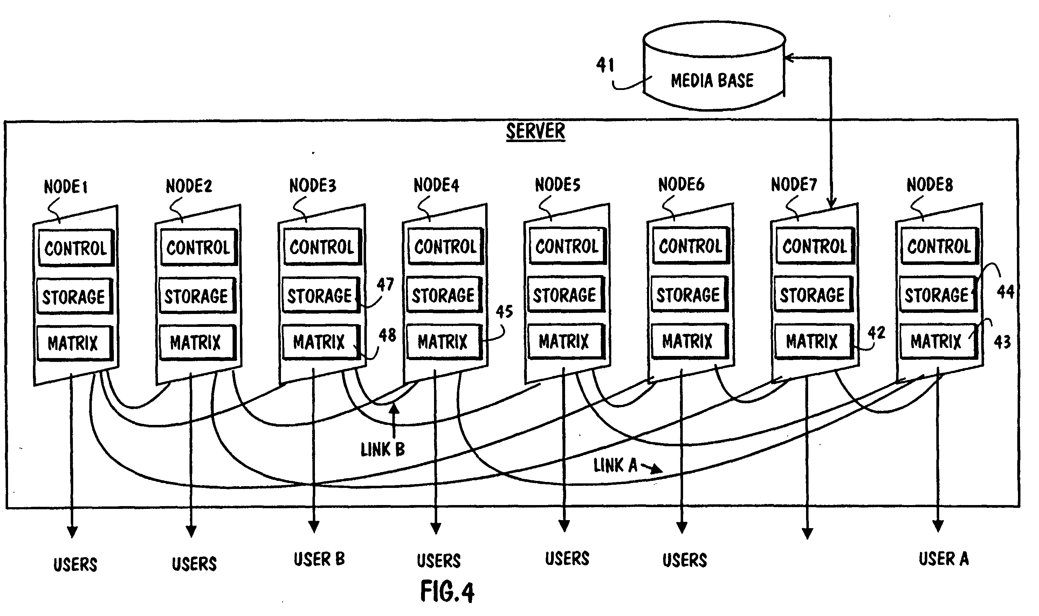

Basic construction of the server is shown in FIG. 4.The server comprises of a plurality of nodes, in the figure eight nodes are shown. The node includes a storage, which is preferably a hard disk, a routing matrix and necessary control electronics. Detailed description of these elements are given later. Further, each node owns a unique address. At least one user line can be connected to every node. One or more of the nodes are further connected to a media source. It can be central storage which is connected to the server and which includes media which is offered for users. It can also be a remote source accessible via a transmission network. Media can consist of data files, text files audio and video files etc. How the central storage is constructed and from where it receives data to be stored therein is out of scope of this disclosure.

The nodes are interconnected via links so that one node is connected with more than one of another nodes. The preferred way to logically establish connecting links between nodes will be explained later.

The basic operating principle of the server entity is as follows:

For example user A, which is connected to node 8, requests the server to download a file, let's say a video clip. The requested file is fetched from central storage 41 or from another source, the entry point to the being node 7. Routing matrix 42 in this node routes the requested file through the node toward node 8. There, routing matrix 43 routes the file to storage 44. The storage which is preferably a hard disk stores the file. Not until now can the file be downloaded to user A.

It is very essential to note that requested video clip as a whole or at least a part of it is firstly stored in the storage of the node and the user connected to the node can obtain information only by reading the content of the storage.

After user A has downloaded and watched the video clip, a copy of it still remains in storage 44.

Next, user B connected to node 3 requests the same video clip as user A did earlier. The control system (not shown in the figure) knows that the nearest place where the video clip is retrievable is storage 44 of node A. Due to the fact that all the nodes are interconnected with the links, the control system instructs node 8 to send the video clip to node 3. In this example, the video clip is first routed via the link A to node 4. Routing matrix 45 of that node in turn routes the clip via link B to node 3. There, routing matrix 48 routes the video clip to storage 47, from which the user can download the file. Downloading can begin either after the completed storing process or after the storing process has started and at least a part of the file is stored.

Now, the video clip is stored in and available from two nodes of the server, namely in node 8 and in node 3. In the above described way the amount of nodes comprising the copy of the video clip increases as the number of the users requesting it increases. As a result, the more users have had the same video clip the faster a new user can have it.

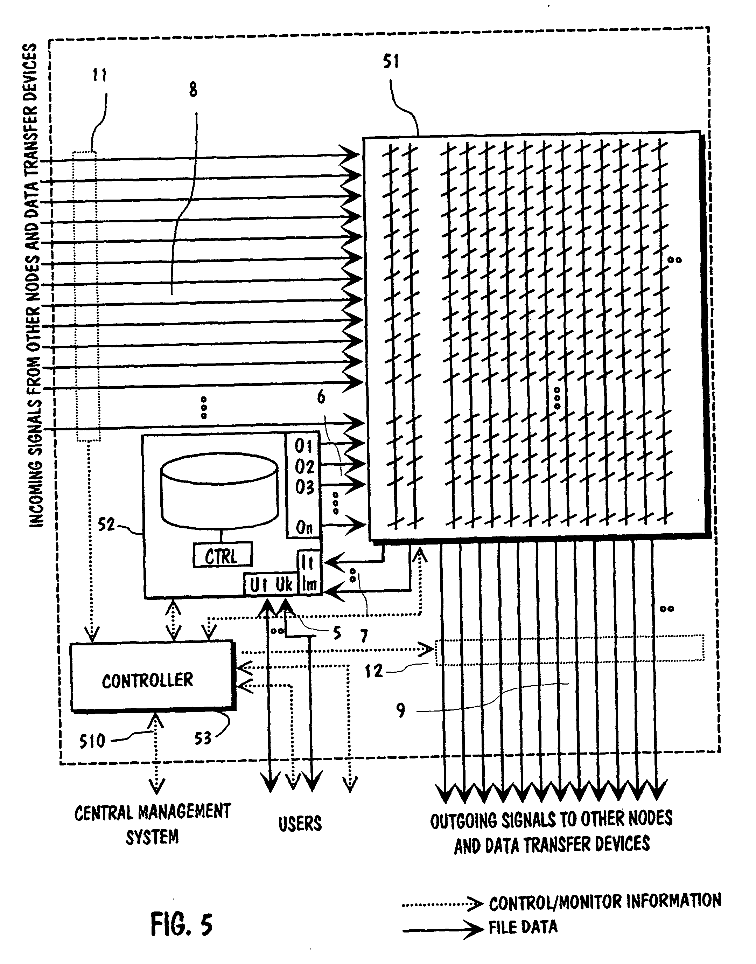

FIG. 5 shows a structure of the node according to the invention. The node has three different functions: it operates as a routing channel between the other nodes, provides means for data transfer from the node to users connected to the node and stores data in its memory for further distribution. For above mentioned purposes the node includes at least routing matrix 51, data storage 52 and controller 53. In addition, the node also includes output connection lines 01, 02,..,On for transferring data from data storage 52 to routing matrix 51 and input connection lines I1, I2,..,In for transferring data from routing matrix 51 to data storage 52. Further, node is provided with at least one data connection U1, U2,...,Uk through which data are transmitted to and received from a user.

Links 8 and 9 which connect the node to other similar nodes or data transfer devices are connected to routing matrix 51. Hence, the matrix is capable to route data transfers from other nodes or data transfer devices to other nodes or data transfer devices. In case the incoming data is addressed to the node itself, the matrix routes said incoming data to input connection lines I1, I2,..,In, wherein data will be stored in data storage 52. If data which has been stored in the data storage have to transfer to another node of the server, it will be sent through output connection lines O1, O2,..,On to routing matrix 51. Routing matrix connects one of the output connection lines to one or more outgoing channel of link 9. It should be noted that a plurality of data streams can be carried in a single physical line.

Data storage 53 is formed by a magnetic, optical or solid state memory. With the data storage is associated controller CTRL, serving both data connections for delivering data contained in data storage 52 to at least one immediate user 5 through data connections U1, U2,...,Uk, and at least one input line 7 and at least two outputs, in one or more physical lines 6, connected to routing matrix 51. The data storage has sufficient capacity to store the data of at least one continuously playable video and/or audio sequence of an average length.

Controller 53 is suited for controlling the functions of data storage 52 and routing matrix 51. In addition, the controller is capable to receive control data from the dedicated users of the node and from the possible central management system through appropriate connection 510.

As a result from construction of the node described above, the node has the capability to distribute data from its data storage simultaneously both to the dedicated users connected to the node and to at least two other nodes or nodes having access to the data transfer devices. It also has the capability to route data transfer from the inputs to the node to the outputs from the node whenever it does not need access to the contents of the transferred data. Further, the node has the capability to store a file into its data storage whenever the node has an internal need for gaining access to the transferred data. The node is capable to start delivery of a file to other nodes and the users even if the entire content of the file has not yet been copied into the data storage of the node.

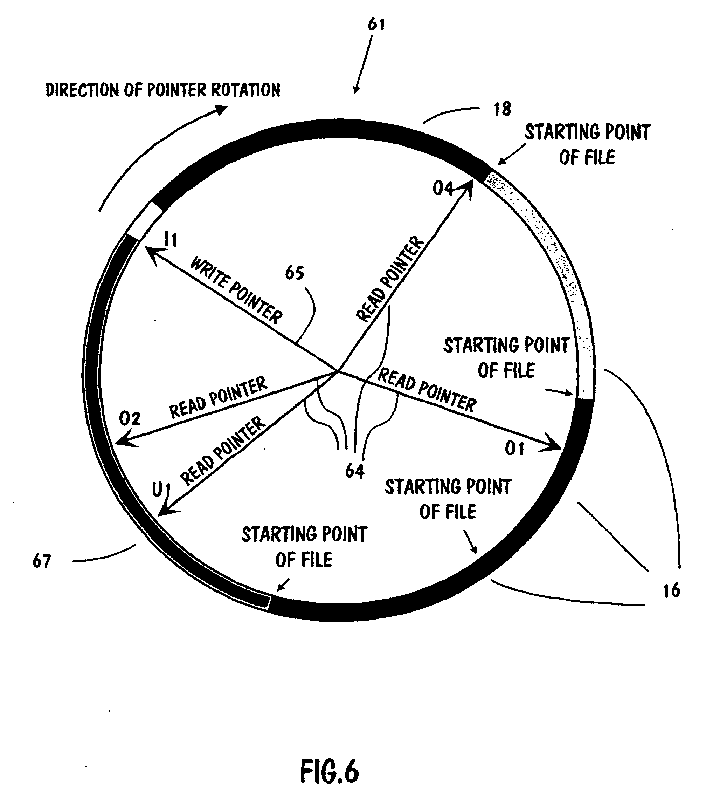

Now, the organization of data in the data storage will be explained with reference to FIG. 6.

There is reserved space for user-specific ring buffers 61 in the data storage. Each buffer has its own connection with the routing matrix to obtain the incoming data and connection to deliver data to the user. Further, a file could be delivered from the ring buffer via the output of the data storage and the routing matrix to at least two outgoing data links from the node with the provision that, at the beginning of said intended file transfer, the start point of the file exists in the ring buffer.

Each buffer is an elastic ring buffer and it operates as follows:

First, all the files requested by the user and transferred through the routing matrix are written to ring buffer 61. In the ring buffer there is one write pointer 65, which serves in storing of incoming data 67 into the buffer, and several read pointers 64. The maximum number of read pointers is limited by the seek time and data transfer rate of the data storage. Read pointers 64 serve the user of the ring buffer and those nodes which are copying files from this node's ring buffer into their own data storage. When write pointer 65 passes by the starting point of any file, for example file 18, this file is marked and registered by the central management system of the server as no longer available from this ring buffer 61. Slowing down of the write pointer 65 whenever it reaches any of read pointers 64 guarantees undisturbed read for any file. The data transfer connection with the routing matrix has the capability to reduce the data write speed so as to prevent the write pointer from passing-by any of the read pointers.

Use of a plurality of circular buffers makes it possible to serve user's request for files which need different data transfer rates.

The server may have a preset minimum data transfer rate or rates defined separately for each different file type whereby the data transmission rate employed between the nodes must exceed the preset minimum data transfer rate or rates. The minimum data transfer rate is greater than or equivalent to the maximum real time transfer rate of the particular file type or types. Alternatively, all file types can use same rate, whereby the preset data transfer rate(s) must exceed the data transmission rate used between the nodes. Respectively, faster than real time movement of read pointer 64 of the ring buffer assures that the read pointer moves aside faster than required for undisturbed read of any incoming file. In other words, the maximum real time data rate is related with the situation in which pointers handle several file types. The read pointer 04 in FIG. 6 must go before the write pointer 65 with such a rate that the write pointer does not need to slow down its own rate to be slower than the real time rate.

Use of the elastic ring buffer offers significant advantages. It makes real-time data management easier in the server while simultaneously giving the user a constant amount of storage capacity which is in an uncomplicated manner available to the user. As an additional benefit, data fragmentation in the ring buffer is practically non existent. The buffer also makes file management easier: statistically, the life span of a file in the server will be longer if the file is in frequent use over an extended period of time, while files subject to random and rare requests will have only a short life span. When necessary, the central management unit of the server can have any file copied into a storage area outside the ring buffers, either into the data storage of the node, or into a high-capacity magnetic or optical storage of a data transfer node.

A node is called the data transfer node if it has at least one data transfer device connected thereto, such as a connection to an external memory, to a data communications network, to an information producer or to an essentially real-time, high-capacity data base. Such a node does not have to be provided with user dedicated connections, with the data storage or the routing matrix.

Transfer of a file into the data storage takes always place at a rate faster than real time. Consequently, a file, for instance file 67 in FIG. 6, is always presentable and available from the data storage immediately after the data transfer has been initiated. For the same reason, all the files having their starting point copied into the ring buffer 61 are readable from there, from the starting point to the end.

Although the description above and Fig. 6 refer to the use of a ring buffer, data transfer at a rate faster than real time can assure faster release of the memory space than is required for the write operation even without the ring buffer. However, the management of data transfer in a node not equipped with the ring buffer becomes essentially more complicated.

### Preferred embodiment of implementation of the links

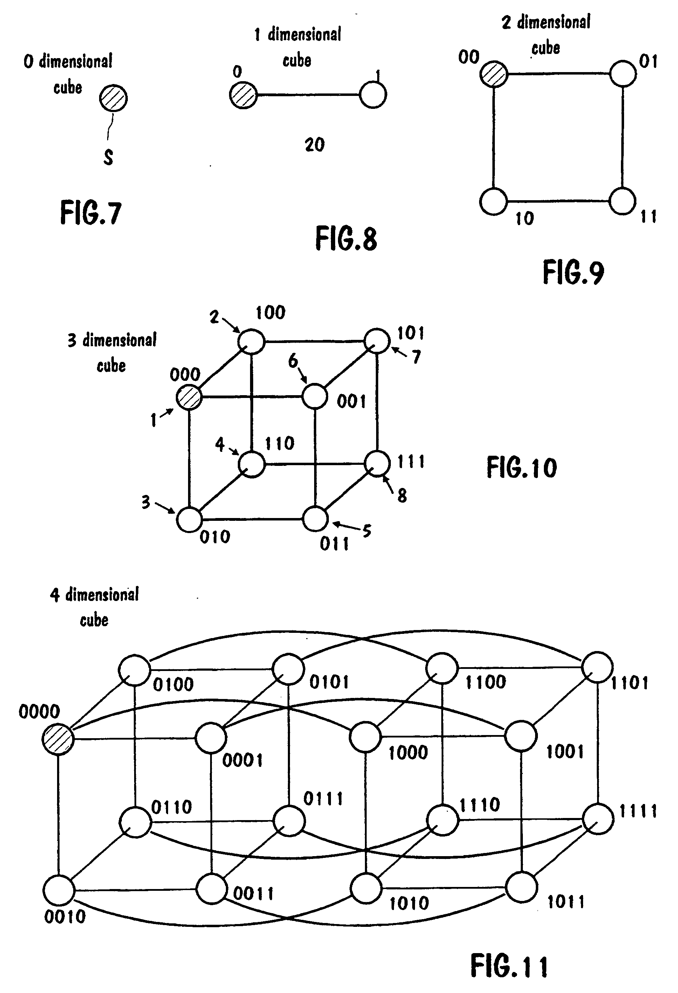

Reference is now made to FIGs 7-9. The best mode to interconnect the nodes with links is to linkage the nodes in such a way that the structure forms a hyper cube, which is known *per se.* The hyper cube architecture known in the art as a typical multinode message-passing server configuration was introduced in the mid-70's. Those who are interested in the theory can obtain more information from W. Millard: Hyperdimensional Microprocessor Collection Seen Functioning as a Mainframe, Digital Design, 1975, Vol. 5, No. 11, p. 20. Later the hypercube has established its position as a widespread parallel-processing architecture. A hierarchical network resembling a hypercube is disclosed in US Pat. No. 5,471,580 to which reference is made as a background art only. However, the hyper cube architecture implemented in a media server is novel.

The invention does not set any limitations on the way how the nodes are interconnected to form a file server. However, the best mode is to use hyper cube architecture. Next a file server with a structure of an N-dimensional will be described. Therefore, a short general description of the hyper cube is needed.

FIG. 7 shows a 0 dimensional hypercube. It has only one node S. In FIG.8, an 1 dimensional hypercube is formed by copying the original node S and putting data link 20 between these two nodes. The original node S is addressed by number 0 and the copy by number 1.

A 2 dimensional hypercube is formed by copying the template i.e. the 1 dimensional cube and putting links between the respective old and new nodes as shown in FIG. 9. The nodes are addressed by adding value 0 in front of the addresses of the template nodes and value 1 in front of the addresses of the copy nodes.

FIG. 10 shows a 3 dimensional cube which is formed by copying the 2 dimensional cube of FIG.9, putting links between respective nodes and adding addresses.

FIG. 11 shows a 4 dimensional hyper cube. Forming of that cube from the 3 dimensional hyper cube of fig. 10 should be clear.

Hence, an N-dimensional hypercube can be formed by copying a N-1 dimensional hypercube and connecting the corresponding nodes with data links. In the copying process of the hypercube, in front of the old addresses of the nodes of the template hypercube is added one bit which has value 0 whereas value 1 is added for the addresses of copied hypercube. By virtue of this numbering scheme, the binary address of two adjacent nodes differs by one bit only.

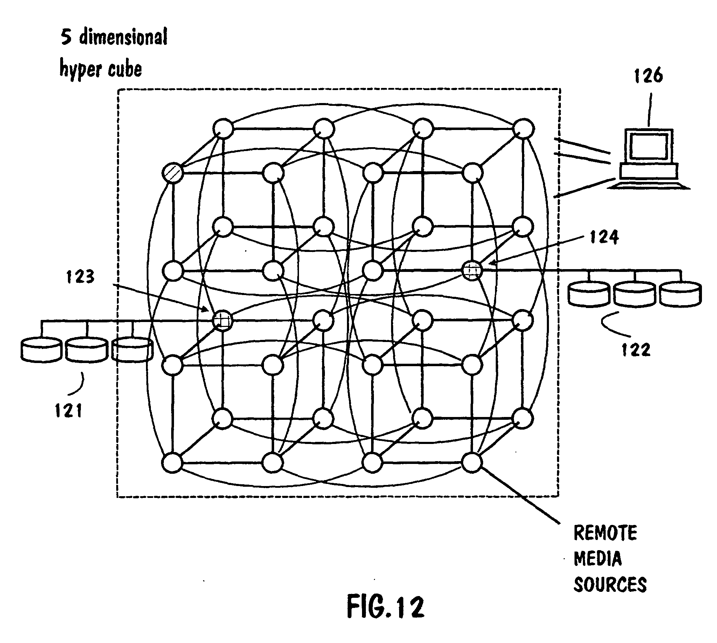

A server with the hyper cube architecture can be built by making nodes having features described in connection with FIG.5 and connecting the nodes in above described way to form a hyper cube. The result is depicted in FIG. 12. In this figure, high-capacity data bases 121 and 122 are connected to nodes 123 and 122, respectively. A central management unit 126 controls operation of the server. The great advantage is that there is no limit to number of the nodes. It is easy to add new nodes and connect them with links to the existent server. The server is then fully scalable

In the hyper cube two adjacent nodes are always connected by a data link. The node according to the present invention is able to transparently route data transfers from a node to another of the server. The distance d between two communicating nodes is defined as the smallest number of data links needed for data transfer between these nodes. When the nodes are arranged in the form of hypercube with the addresses of the nodes numbered as previously described, whereby the binary addresses of any two adjacent nodes can differ by one bit only, the distance between two nodes is obtained by applying the exclusive-OR (XOR) operator to these binary numbers and counting the number of 1's in the result. Then, the amount of shortest possible data transfer routes is the factorial d! of the distance. Assuming that every data link has an equal probability of being already in use, the probability of finding a free route between transmitting node and receiving node will be the higher the greater the distance between these nodes. This means that user accessibility to the files will be the better the larger the user base for which the server is constructed.

In single server architectures, constraints set by the data storage seek time and data transfer rate are the most common bottlenecks limiting the expandability of the server. In the server according to the present invention these problems can be avoided by limiting the number of users connected to a node and simultaneous intemode data transfers, yet availing the inexpensive technology of the present invention.

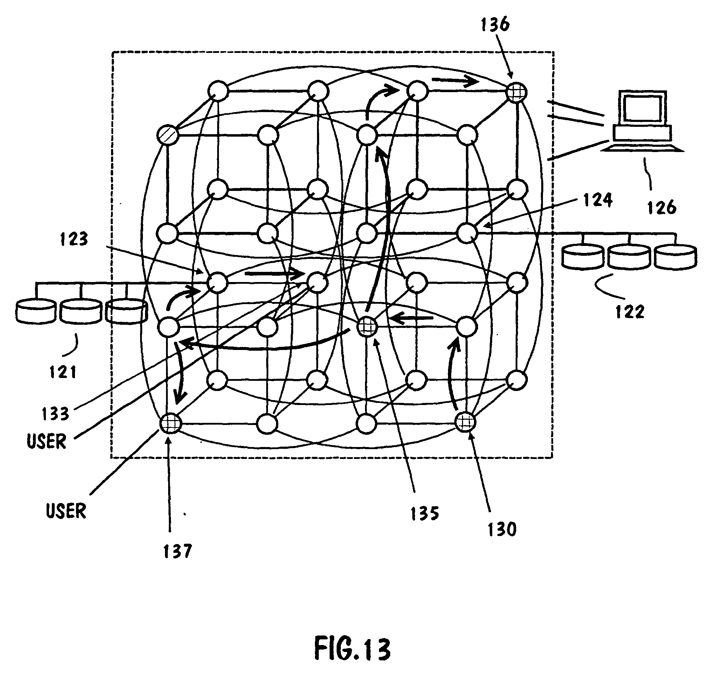

Operation of the server is now explained with reference to FIG. 13. When a user requests a file, his node 133 contacts central management system 126 that checks which one(s) of nodes 130, 135, 136 have the requested file. It notes, that the requested file has been while ago copied from node 130 to nodes 135 and 136. In consequence, a route is established from closest routeable node 135 to user's node 133 and the replicating data transfer is initiated. Immediately at the beginning of the replicating data transfer, the central management system 126 registers the requested file being available also from the user's node 133. As a result, files requested simultaneously by a plurality of users will be simultaneously available in real time from nodes 135, 136, 133 to new node 137 requesting the file in question.

Data communication nodes 123, 124 in FIG. 12 are able to transfer files, e.g., from external servers or from a high-capacity data storage device. There can be several data communication nodes with the same data contents in a single server system. The user-requested file may be fetched from the data communication nodes if the file data is not available from any user nodes at a reasonably short distance. If the system detects that none of the data communication nodes contains a minimum amount of file data sufficient for assuring start of sustained data transfer from these external sources, the file must be copied to the data storage of the data communication node prior to passing it to the internal data links of the server.

The above-described technique represents an exemplifying embodiment of the implementation of a file server. Still higher bit rate can be achieved by clustering several nodes to serve a single user, e.g., by synchronizing the outputs of and combining the data from these nodes into a single bit stream. It should also be noted, that the node according to the invention makes it also possible to implement multiple parallel data connections into the data channels serving as the data transfer links between the nodes using, e.g., any conventional method of modulation, alternation or contention.

All the functions of central management system 126 in FIG 13 can be decentralized to the nodes which in such a configuration are arranged to communicate with each other and establish routes without any separate controller. This is possible, because the central management system does not have to contain any information which would not be as readily be available from the nodes.

The use of a hypercube architecture not only gives an easy-to-manage symmetrical structure and the possibility of using identical nodes, but also offers a server availability which does not decrease when the size of the server increases.

The elucidate this fact, a situation will be contemplated in which only one copy of each file has been made, each copy into a separate node, and every data link carries only one data transfer at a time. This state may be considered to represent a worst case situation, because routing inside the server will become easier after several copies of a file in different nodes are available. Then, an average fetch distance for the data transfer of a file is N/2, reserving N/2 data links between the nodes. Related to this case, three important findings are made:
1) The server has (N/2)*2^{N} data links and 2^{N} users, which means that the number of data links increases at the same rate as the need for the links. At the same time, the probability of any particular link being already reserved remains constant.
2) As an average, (N/2)! different routes are available for a data transfer, and moreover, the probability of all of them being reserved simultaneously decreases when N increases.
3) In a larger multinode server, the probability of finding a copy of a requested file is also higher. This means that the search for a free route can be extended to a greater number of nodes and probability of finding a free routed to a desired node increases.

The invention is primarily intended to provide a sustained data transfer to a plurality of simultaneous users. Hence, the invention is particularly suited for use in video-on-demand systems in which a single server may provide services up to thousands of users. Simultaneously, an improved fault tolerance of the server is attained, because a server consisting of several nodes may now be inexpensively constructed with the additional advantage that no single-node failure can stop the function of the entire server system.

## Claims

1. A file server for the distribution of files, particularly video and audio files, the file server comprising a set of similar nodes, each node being accessible to at least one user and being connected to other nodes of the set, and at least one node being connectible to other data transfer channels, such as an external communications network, to a nearly on-line data base, such as a magnetic or optical mass storage, or to data transfer devices performing data transfer between the nodes, and to a central management unit,
means for delivering data contained in the server to at least one user,
data storage means (2) formed by a magnetic, optical or solid-state memory associated with a controller, having a data connection for said at least one user having access to the node and further having at least one input (7) and at least two outputs (6) connected to a routing matrix (3), and having sufficient capacity to store the data of at least one continuously playable video and/or audio sequence of an average length,
the routing matrix (3) capable of routing data transfers from other nodes or data transfer devices or from said data storage means (2) of the node itself to other nodes or data transfer devices, or routing data transfer from other nodes or data transfer devices to the data storage means (2), in which data transfer a plurality of data streams can be carried in a single physical data transfer channel, and
a control device (4) suitable for controlling the functions of the data storage means (2) and the routing matrix (3), whereby the control device (4) is capable of receiving control data from the users of the node (1) and from a central management system through an appropriate connection (10),
and in that said node is further adapted to
distribute data from its data storage means (2) simultaneously both to the users (1) of the node and to at least two other nodes or data transfer devices,
route data transfers from the inputs to the outputs whenever it does not need access to the contents of the transferred data,
store a file into the data storage (2) whenever the node has an internal need for gaining access to the transferred data, and
start the delivery of a file to other nodes and the data transfer devices and the users even if the entire content of the file has not yet been copied into the node (2).

2. The file server as in claim 1, **characterized in that** the data connections (5) serving the users of the node pass through said routing matrix (3).

3. The file server as in claim 1, **characterized in that** the node further comprises
a storage space reserved for user-specific elastic ring buffers (13) in the data storage means (2) of the node, each elastic ring buffer (13) having its own connection in the routing matrix to obtain the incoming data,
an optional plurality of elastic ring buffers serving user requests for files that need different data transfer rates,
an arrangement permitting each of the user-specific elastic ring buffers (13) to store the data coming from other nodes or data transfer devices under a request of the user of the node,
wherein the node is capable of delivering a file from its elastic ring buffer (13) via the output of its data storage (7) and the routing matrix (3) to at least two outgoing data transfer channels (9) from the node with the provision that, at the beginning of said intended file transfer, the start point of the file exists in said elastic ring buffer (13), and the data transfer connection between the elastic ring buffer and the routing device is capable of reducing the data write speed so as to prevent the write pointer (15) from passing-by any of the read pointers (14).

4. The file server as defined in any of claims 1 - 3,
**characterized in that**
the control data of the node is transferred in the same incoming (8) and outgoing (9) channels as are used for file transfer,
the incoming control data is separated from the signal of the incoming data transfer channels by means of a control data separation device (11) connected to said routing matrix (3), and
the outgoing control data is connected onto the outgoing data transfer channels by means of connection device (12) operating separately or connected to said routing matrix (3).

5. The file server as defined in claim 1, **characterized in that** the node (1) is also capable of receiving information via the data transfer connections of its users.

6. The file server as defined in claim 1, **characterized in that** the node has at least one data transfer device connected thereto, such as a connection to an external memory, a data communications network (21) or an information producer or a nearly on-line high-capacity data base.

7. The file server as in any of preceding claims 1-6, **characterized in that**
the users of the server receive the information contained in the files via the nodes (1),
each node (1) communicates with at least three other nodes or data transfer devices, and
the file server has preset a data transfer rate defined separately for each different file type, or alternatively, operates at a minimum data transfer rate sufficiently high for use with all different file types, whereby the data transmission rate employed between the nodes (1) must exceed said preset or minimum data transfer rates

8. The file server as defined in claim 7, **characterized in that** said filer server has at least one user capable of communicating with a number of nodes (1) simultaneously.

9. The file server as defined in claim 7, **characterized in that** data transfer between any given pair of nodes can be performed over more than one route.

10. The file server as defined in claim 1 or 6, **characterized by**
the data transfer devices incorporated therein, said devices being capable of distributing files of identical content via data transfer channels (9) and having the capability of distributing files of identical content located in a decentralized manner in the separate nodes (1) so that separate routes can be established from the nodes to the data communications nodes.

11. The file server as defined in claim 7, **characterized in that**
the set of nodes are arranged in the form of a hypercube.

## Patentansprüche

1. Dateiserver zur Verteilung von Dateien, insbesondere von Video- und Audiodateien, umfassend einen Satz an ähnlichen Knoten, wobei jeder Knoten mindestens einem Benutzer zugänglich ist und mit anderen Knoten aus dem Knotensatz verbunden ist, und wobei mindestens ein Knoten an andere Datenübertragungskanäle, wie zum Beispiel an ein externes Kommunikationsnetz, an eine nahezu Online-Datenbank, beispielsweise an einen magnetischen oder optischen Massespeicher, oder an Datenübertragungseinrichtungen zur Übertragung von Daten zwischen den Knoten und an eine zentrale Verwaltungseinheit anschließbar ist,
Mittel zur Übermittlung von in dem Server enthaltenen Daten an mindestens einen Benutzer,
durch einen einer Steuerung zugeordneten magnetischen, optischen oder Festkörperspeicher gebildete Datenspeichermittel (2) mit einem Datenanschluss für den mindestens einen Benutzer, der Zugang zum Knoten hat, und außerdem mit mindestens einem Eingang (7) und mindestens zwei Ausgängen (6), die mit einer Routingmatrix (3) verbunden sind, und mit genügend Kapazität, um die Daten einer kontinuierlich abspielbaren Video- und/oder Audiosequenz mittlerer Länge speichern zu können,
die Routingmatrix (3), welche in der Lage ist, die Übertragung von Daten von anderen Knoten oder Datenübertragungseinrichtungen oder von den Datenspeichermitteln (2) des Knoten selbst an andere Knoten oder Datenübertragungseinrichtungen weiterzuleiten oder die Datenübertragung von anderen Knoten und Datenübertragungseinrichtungen an die Datenspeichermittel (2) weiterzuleiten, wobei bei dieser Datenübertragung eine Vielzahl an Datenströmen in einem einzigen physischen Datenübertragungskanal geführt werden können, und
eine Steuereinrichtung (4) zur Steuerung der Funktionen der Datenspeichermittel (2) und der Routingmatrix (3), wobei die Steuereinrichtung (4) in der Lage ist, über eine geeignete Verbindung (10) von den Benutzern des Knoten (1) und von einem zentralen Verwaltungssystem Steuerdaten zu empfangen,
wobei der Knoten weiterhin dafür geeignet ist,
aus seinen Datenspeichermitteln (2) Daten gleichzeitig sowohl an die Benutzer (1) des Knoten als auch an mindestens zwei weitere Knoten oder Datenübertragungseinrichtungen zu verteilen,
Datenübertragungen immer dann von den Eingängen zu den Ausgängen zu routen, wenn kein Zugang zum Inhalt der übertragenen Daten erforderlich ist,
eine Datei immer dann in dem Datenspeicher (2) zu speichern, wenn der Knoten einen internen Bedarf an einem Zugang zu den übertragenen Daten hat, und
mit der Übermittlung einer Datei an weitere Knoten und an die Datenübertragungseinrichtungen und an die Benutzer auch dann zu beginnen, wenn der gesamte Inhalt der Datei noch nicht in den Knoten (2) kopiert wurde.

2. Dateiserver nach Anspruch 1, **dadurch gekennzeichnet, dass** die für die Benutzer des Knoten bereitgestellten Datenverbindungen (5) durch die Routingmatrix (3) verlaufen.

3. Dateiserver nach Anspruch 1, **dadurch gekennzeichnet, dass** der Knoten weiterhin umfasst
einen in dem Datenspeichermittel (2) des Knoten für benutzerspezifische elastische Ringpuffer (13) vorgesehenen Speicherraum, wobei jeder elastische Ringpuffer (13) in der Routingmatrix seine eigene Verbindung hat, um eingehende Daten zu erhalten,
eine wahlweise vorgesehene Vielzahl an elastischen Ringpuffern zum Weiterleiten von Benutzeranfragen nach Dateien, die unterschiedliche Datenübertragungsraten benötigen,
eine Anordnung, die es jedem der benutzerspezifischen elastischen Ringpuffer (13) ermöglicht, die auf Anfrage eines Knotenbenutzers von anderen Knoten oder Datenübertragungseinrichtungen abgerufenen Daten zu speichern,
wobei der Knoten in der Lage ist, eine Datei von seinem elastischen Ringpuffer (13) über den Ausgang seines Datenspeichers (7) und über die Routingmatrix (3) an mindestens zwei vom Knoten ausgehenden Datenübertragungskanäle (9) zu übermitteln unter der Bedingung, dass zu Beginn der vorgesehenen Dateiübertragung der Startpunkt der Datei in dem elastischen Ringpuffer (13) vorhanden ist, und dass die Datenübertragungsverbindung zwischen dem elastischen Ringpuffer und der Routingeinrichtung in der Lage ist, die Datenschreibgeschwindigkeit derart zu verringern, dass der Schreibzeiger (15) daran gehindert wird, an den jeweiligen Lesezeigern (14) vorbeizugehen.

4. Dateiserver nach einem der Ansprüche 1 bis 3, **dadurch gekennzeichnet,dass**
die Übertragung der Steuerdaten des Knoten in den gleichen ankommenden (8) und ausgehenden (9) Kanälen wie die Dateiübertragung erfolgt,
die eingehenden Steuerdaten mittels einer mit der Routingmatrix (3) verbundenen Steuerdatentrennvorrichtung (11) vom Signal der eingehenden Datenübertragungskanäle getrennt werden, und
die ausgehenden Steuerdaten mittels einer getrennt arbeitenden oder mit der Routingmatrix (3) verbundenen Verbindungsvorrichtung (12) mit den ausgehenden Datenübertragungskanälen verbunden sind.

5. Dateiserver nach Anspruch 1, **dadurch gekennzeichnet, dass** der Knoten (1) auch in der Lage ist, Informationen über die Datenübertragungsverbindungen seiner Benutzer zu empfangen.

6. Dateiserver nach Anspruch 1, **dadurch gekennzeichnet, dass** der Knoten mindestens eine mit ihm verbundene Datenübertragungseinrichtung hat, wie zum Beispiel eine Verbindung zu einem externen Speicher, einem Datenkommunikationsnetz (21) oder einem Informationsproduzenten oder einer nahezu Online-Hochleistungsdatenbank.

7. Dateiserver nach einem der vorstehenden Ansprüche 1 bis 6, **dadurch gekennzeichnet,dass**
die Benutzer des Servers die in den Dateien enthaltenen Informationen über die Knoten (1) erhalten,
jeder Knoten (1) mit mindestens drei weiteren Knoten oder Datenübertragungseinrichtungen kommuniziert, und
der Dateiserver eine für die jeweils unterschiedlichen Dateitypen separat definierte Datenübertragungsrate voreingestellt hat, oder alternativ hierzu mit einer Mindestübertragungsrate betrieben wird, die für alle unterschiedlichen Dateitypen hoch genug ist, wobei die zwischen den Knoten (1) verwendete Datenübertragungsrate die voreingestellten oder Mindestübertragungsraten überschreiten muss.

8. Dateiserver nach Anspruch 7, **dadurch gekennzeichnet, dass** der Dateiserver mindestens einen Benutzer hat, der in der Lage ist, mit einer Anzahl an Knoten (1) gleichzeitig zu kommunizieren.

9. Dateiserver nach Anspruch 7, **dadurch gekennzeichnet, dass** die Datenübertragung zwischen einem beliebigen Knotenpaar über mehr als eine Route erfolgen kann.

10. Dateiserver nach Anspruch 1 oder 6, **gekennzeichnet durch** die darin eingebauten Datenübertragungseinrichtungen, wobei diese Einrichtungen in der Lage sind, Dateien mit identischem Inhalt über Datenübertragungskanäle (9) zu verteilen und die Fähigkeit aufweisen, Dateien mit identischem Inhalt, die sich dezentralisiert in den getrennten Knoten (1) befinden, derart zu verteilen, dass von den Knoten zu den Datenkommunikationsknoten getrennte Routen erstellt werden können.

11. Dateiserver nach Anspruch 7, **dadurch gekennzeichnet, dass** der Knotensatz in Form eines Hyperkubus angeordnet ist.

## Revendications

1. Serveur de fichiers pour la distribution de fichiers, notamment de fichiers vidéo et audio, du type comportant un ensemble de noeuds similaires, chaque noeud étant accessible à au moins un utilisateur et étant relié à d'autres noeuds de l'ensemble et au moins un nceud étant apte à être relié à d'autres canaux de transfert de données tel qu'un réseau de communication extérieur, à une base de données pratiquement en ligne telle qu'une mémoire de masse optique ou magnétique ou à des dispositifs de transfert de données assurant le transfert de données entre les noeuds et à une unité centrale de gestion,
des moyens destinés à transmettre les données contenues dans le serveur à au moins un utilisateur,
des moyens de mémorisation de données (2) formés par une mémoire magnétique, optique ou à semiconducteurs associée à un contrôleur, avec une connexion de données pour l'au moins un utilisateur ayant accès au noeud et avec par ailleurs au moins une entrée (7) et au moins deux sorties (6) reliées à une matrice de routage (3), et avec suffisamment de capacité pour stocker les données d'au moins une séquence vidéo et/ou audio de longueur moyenne destinée à être lue en continu,
la matrice de routage (3) pour le routage de transferts de données provenant d'autres noeuds ou dispositifs de transfert de données ou provenant des moyens de mémorisation de données (2) du noeud même vers d'autres noeuds ou dispositifs de transfert de données ou pour le routage du transfert de données provenant d'autres noeuds ou dispositifs de transfert de données vers les moyens de mémorisation de données (2), une pluralité de flots de données pouvant être acheminée dans un seul canal physique de transfert de données dans ce transfert de données, et
un dispositif de contrôle (4) pour contrôler les fonctions des moyens de mémorisation de données (2) et de la matrice de routage (3), le dispositif de contrôle (4) étant capable de recevoir des utilisateurs du noeud (1) et d'un système de gestion central des données de contrôle par le biais d'une connexion appropriée (10),
et le noeud étant par ailleurs adapté pour
distribuer simultanément aux utilisateurs (1) du noeud et à au moins deux autres noeuds ou dispositifs de transfert de données des données stockées dans ses moyens de mémorisation de données (2),
effectuer le routage de transferts de données depuis les entrées vers les sorties chaque fois qu'il n'est pas nécessaire d'accéder au contenu des données transférées,
stocker un fichier dans la mémoire de données (2) chaque fois que le noeud a un besoin interne d'accéder aux données transférées, et
commencer la transmission d'un fichier vers d'autres noeuds et vers les dispositifs de transfert de données et les utilisateurs sans même attendre que tout le contenu du fichier ait été copié dans le noeud (2).

2. Serveur de fichiers selon la revendication 1, **caractérisé en ce que** les connexions de données (5) servant les utilisateurs du noeud passent par la matrice de routage (3).

3. Serveur de fichiers selon la revendication 1, **caractérisé en ce que** le noeud comporte par ailleurs
dans les moyens de mémorisation de données (2) du noeud un espace de stockage réservé à des tampons circulaires (13) élastiques spécifiques à l'utilisateur, chaque tampon circulaire élastique (13) ayant sa propre connexion dans la matrice de routage pour obtenir les données entrantes,
une pluralité optionnelle de tampons circulaires élastiques servant les requêtes d'utilisateurs demandant des fichiers qui nécessitent différentes vitesses de transfert des données,
un agencement permettant à chacun des tampons circulaires élastiques (13) spécifiques à l'utilisateur de stocker les données provenant d'autres noeuds ou dispositifs de transfert de données suite à une requête de l'utilisateur du noeud,
le noeud étant capable de transmettre, via la sortie de sa mémoire de données (7) et la matrice de routage (3), un fichier de son tampon circulaire élastique (13) à au moins deux canaux de transfert de données (9) sortant du noeud à condition qu'au début du transfert de fichier que l'on a l'intention de réaliser le point de départ du fichier existe dans le tampon circulaire élastique (13) et la connexion de transfert de données entre le tampon circulaire élastique et le dispositif de routage étant capable de réduire la vitesse d'écriture des données de manière à empêcher le pointeur d'écriture (15) de passer devant l'un quelconque des pointeurs de lecture (14).

4. Serveur de fichiers selon l'une quelconque des revendications 1 à 3, **caractérisé en ce que**
les données de contrôle du noeud sont transférées dans les canaux entrants (8) et sortants (9) également utilisés pour le transfert de fichiers,
les données de contrôle entrantes sont séparées du signal des canaux de transfert de données entrants par un dispositif de séparation des données de contrôle (11) relié à la matrice de routage (3) et
les données de contrôle sortantes sont reliées aux canaux de transfert de données sortants par le dispositif de connexion (12) fonctionnant séparément ou relié à la matrice de routage (3).

5. Serveur de fichiers selon la revendication 1, **caractérisé en ce que**
le noeud (1) est aussi capable de recevoir des informations via les connexions de transfert de données de ses utilisateurs.

6. Serveur de fichiers selon la revendication 1,
**caractérisé en ce qu**'est relié au noeud au moins un dispositif de transfert de données tel qu'une connexion à une mémoire externe, un réseau de communication de données (21) ou un producteur d'informations ou une base de données de grande capacité pratiquement en ligne.

7. Serveur de fichiers selon l'une quelconque des revendications précédentes 1 à 6,
**caractérisé en ce que**
les utilisateurs du serveur reçoivent les informations contenues dans les fichiers via les noeuds (1),
chaque noeud (1) communique avec au moins trois autres noeuds ou dispositifs de transfert de données et
le serveur de fichiers a prédéterminé une vitesse de transfert de données définie séparément pour chaque différent type de fichier ou, en alternative, fonctionne à une vitesse de transfert de données minimum suffisamment élevée pour pouvoir être utilisée avec tous les différents types de fichier, la vitesse de transmission des données employée entre les noeuds (1) devant être supérieure aux vitesses de transfert de données prédéterminées ou minimum.

8. Serveur de fichiers selon la revendication 7, **caractérisé en ce que** le serveur de fichiers a au moins un utilisateur capable de communiquer simultanément avec un certain nombre de noeuds (1).

9. Serveur de fichiers selon la revendication 7, **caractérisé en ce que** le transfert de données entre une paire quelconque de noeuds peut avoir lieu sur plus d'une route.

10. Serveur de fichiers selon la revendication 1 ou 6, **caractérisé par** les dispositifs de transfert de données qui y sont incorporées, ces dispositifs étant capables de distribuer des fichiers de contenu identique via des canaux de transfert de données (9) et étant aptes à distribuer des fichiers de contenu identique se trouvant de manière décentralisée dans les différents noeuds (1) distincts les uns des autres de telle sorte que des routes distinctes peuvent être établies depuis les noeuds vers les noeuds de communication de données.

11. Serveur de fichier selon la revendication 7, **caractérisé en ce que** l'ensemble de noeuds est agencé en forme d'hypercube.
